# EUROPEAN PATENT SPECIFICATION

(11) **EP 3 540 261 B1**
(45) Date of publication and mention of the grant of the patent: **07.06.2023**
(21) Application number: 18161196.3
(22) Date of filing: 12.03.2018
(51) Int. Cl.: F16G 11/08

(54) **A WIRE ARRANGEMENT AND A METHOD OF JOINING TWO WIRE ENDS**
DRAHTANORDNUNG UND VERFAHREN ZUM VERBINDEN ZWEIER DRAHTENDEN
AGENCEMENT DE FIL ET PROCÉDÉ D'ASSEMBLAGE DE DEUX EXTRÉMITÉS DE FIL

(43) Date of publication of application: 18.09.2019
(73) Proprietor: CWL Patent AB, 792 22 Mora (SE)
(72) Inventor: Granström, Linus, 792 33 Mora (SE); Hedlund, Rolf, 792 00 Mora (SE); Hermans, Magnus, 794 31 Orsa (SE)
(74) Representative: Ehrner & Delmar Patentbyrå AB

(56) References cited:
- FR-A- 510 038
- US-A- 1 979 304
- US-A1- 2015 200 471

## Description

### TECHNICAL FIELD

The invention relates to a wire arrangement, and specifically the invention relates to an arrangement for joining two wire ends. The invention also relates to a method of joining two wire ends to each other.

### BACKGROUND

In safety arrangements, and particularly safety arrangements on roofs or the like, wire arrangements are used for safety reasons. In most European countries it is standard procedure that persons need to be fastened to a safety arrangement when located on a roof or other high places, where accidents due to downfall are at risk. Specifically, persons that are working under such circumstances need to be fastened to a safety arrangement. This is stipulated by national law.

Often such safety arrangements include a wire arrangement, wherein a person located on the roof or the like is attached to said wire arrangement via a safety guard that may slide with respect to said wire arrangement. Often, such a wire arrangement comprises a wire that is arranged along the whole periphery of a roof area or the like on which a person needs a safety guard when setting foot. In such an arrangement the ends of the wires are joined to each other. Further, depending on the size of the area that is provided with a safety wire, several wires need to be used and joined to each other.

The joining of wire ends to each other is sometimes a cumbersome procedure that may be difficult to perform at location, e.g. on a roof. Normally, two wire ends to be joined are provided with threaded terminals that are arranged to be threaded into each other or into a common sleeve with internal threads. A difficulty when such joining is performed is that the whole length of at least one of the wires needs to be rotated along with the corresponding terminal as it is screwed into connection. This is more complicated the longer the wire being screwed is.

In the prior art, different arrangements exist for joining wire ends to each other. One such arrangement is disclosed in GB 250 324, in which two terminals of oppositely directed threads are threaded into a sleeve with an inner connective portion that is arranged in different directions from opposite ends, wherein a portion of the counter-directed threads overlap in a mid-portion of the sleeve. Hence, the sleeve may be screwed onto both terminals in one motion, by rotation of the sleeve as the terminals are held still to prevent them from rotation. Document US1979304 discloses a similar wire connection arrangement.

This arrangement has a drawback in that the screwing of the sleeve onto the terminal ends will inevitably provide a tightening of the wire, which is not always wanted. Further, it involves a complication in that only terminals with counter-directed threads may be attached to each other, and that the sleeve needs to be correctly oriented to allow the terminals to be threaded into it. These are drawbacks that will appear cumbersome on a roof or the like when two wire ends are to be joined to each other.

Hence there is a need of an arrangement that facilitates joining of wire ends.

### SUMMARY OF THE INVENTION

It is an object of the present invention to provide a wire arrangement for joining two wire ends, which may be assembled in an un-cumbersome manner on location, specifically on a roof.

This object is achieved with the inventive wire arrangement for joining two wire ends, which wire arrangement comprises:
- a first terminal part having a wire attachment end with an opening for receiving a first wire end, and an opposite connection end with a first connective portion at least partly provided with a thread,
- a second terminal part having a wire attachment end with an opening for receiving a second wire end, and an opposite connection end with a second connective portion at least partly provided with a thread,
- and a sleeve connector comprising an inner connective portion at least partly provided with a thread for receiving and engaging the first and second connective portions. The inner connective portion is continuous, wherein a combined length of the first and second connective portions of the first and second terminal parts is longer than a length of the sleeve connector, such that the connective portions of the first and second terminal parts may meet inside said sleeve connector.

According to the claimed inventive wire arrangement, a length of the first connective portion of the first terminal part is greater than a length of the second connective portion of the second terminal part.

In a further specific embodiment of the inventive wire arrangement, the length of the sleeve connector is greater than the length of the second connective portion of the second terminal part.

In a further specific embodiment of the inventive wire arrangement, the length of the first connective portion of the first terminal part is between 50 % and 200 % longer than the length of the second connective portion of the second terminal part.

In one specific embodiment of the inventive wire arrangement, the length of the connective portion of the first terminal part is between 75 % and 150 % the length of the connective portion of the first terminal part.

In a specific embodiment of the inventive wire arrangement, the wire arrangement further comprises a thread protector, arranged to cover an exposed portion of the connective portion of the first or second terminal part.

According to a second aspect the invention relates to a method of connecting two wire ends to each other, whereof a first wire end is attached to a first terminal part and second wire end is attached to a second terminal part, the first and second terminal parts comprising a respective connective portion. The method comprises a step of screwing a sleeve connector onto the connective portion of the second terminal part and simultaneously partly unscrewing said a sleeve connector from the connective portion of the first terminal part, and a another step of tightening the first and/or the second terminal part until an outer end of the connective portion of the first terminal part meets an outer end of the connective portion of the second terminal part inside said sleeve connector.

Other embodiments and advantages will be apparent from the detailed description and the appended drawings.

### BRIEF DESCRIPTION OF DRAWINGS

An exemplary embodiment related to the invention will now be described with reference to the appended drawings, in which;
- Fig. 1: shows a first terminal part to be connected to a first wire end;
- Fig. 2: shows a second terminal part to be connected to a second wire end;
- Fig. 3: shows a sleeve connector and a thread protector;
- Figs. 4-8: illustrates the steps involved in joining the terminal parts to each other by threading action of the sleeve connector;
- Fig. 9: is a part sectional view of two terminal parts joined to each other by a sleeve connector; and
- Fig. 10: is a detailed view of a part of fig. 9.

### DETAILED DESCRIPTION OF EMBODIMENTS

Figures 1-3 show the main parts of a wire arrangement for joining two wire ends 5 and 6 to each other. The wire arrangement comprises a first terminal part 1, a second terminal part 2 and a sleeve connector 3.

As is apparent from fig. 1, the first terminal part 1 comprises a wire attachment end 11 with an opening 13 for receiving a first wire end 5, and an opposite connection end 12 with a first connective portion 14. The first terminal part 1 further comprises a main portion 16, which in the shown embodiment is a tubular portion that is adapted to surround and hold the first wire end 5. Typically, the main portion 16 is crimped onto the wire end. The first connective portion 14 of the first terminal part 1 terminates in an outer end 15, which is adapted to lie against a corresponding outer end of the second terminal part 2.

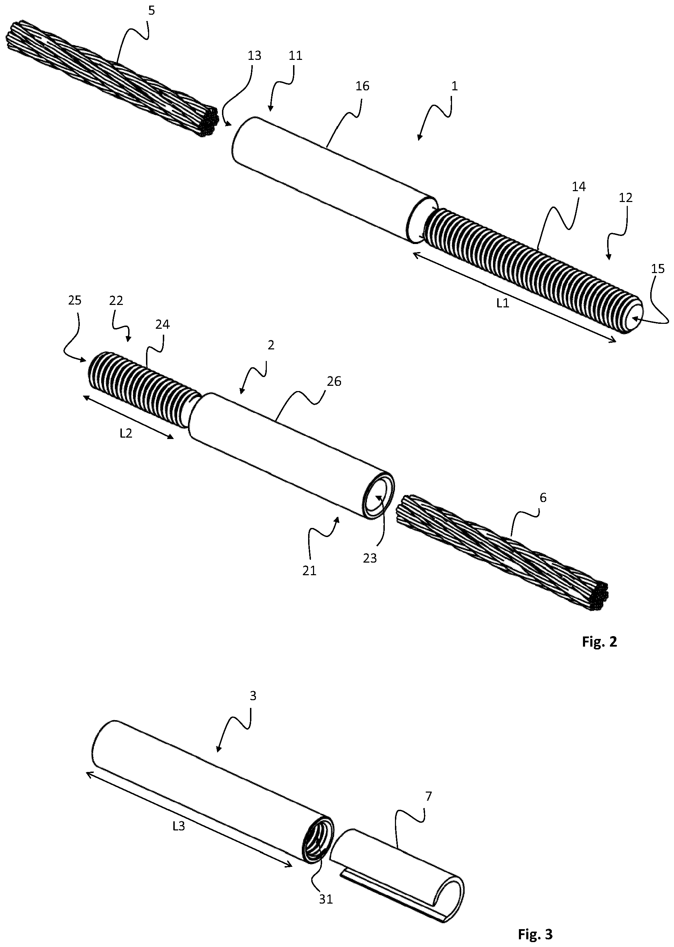

As is apparent from fig. 2, the second terminal part 2 comprises a wire attachment end 21 with an opening 23 for receiving a wire end, and an opposite connection end 22 with a second connective portion 24. Further, the second terminal part 2 comprises a main portion 26 which is crimped onto the wire end. The second connective portion 24 of the second terminal part 2 terminates in an outer end 25, which is adapted to lie against the outer end 15 of the first terminal part 1.

As shown in fig. 3, the sleeve connector 3 comprises an inner connective portion 31 for receiving the first and second connective portions 14,24 of the first and second terminal parts 1,2, respectively. The wire arrangement also includes a thread protector 7. The thread protector 7 is arranged to cover an exposed portion of the connective portion 14,24 of the first or second terminal part 1,2.

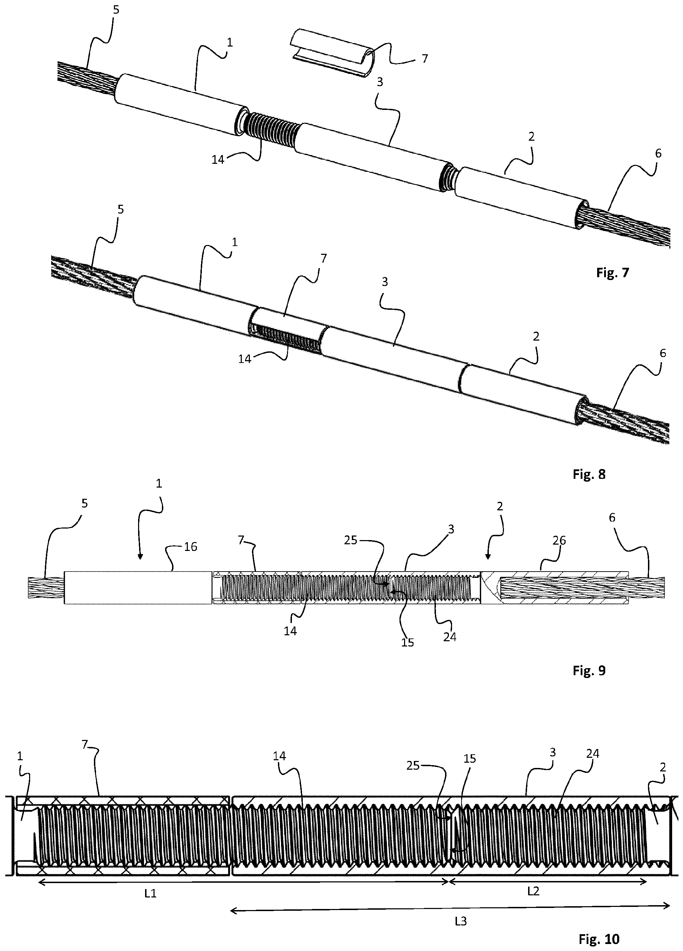

The inner connective portion of the sleeve connector 3 is continuous, such that the first and second connective portions 14,24 of the first and second terminal parts 1,2 may meet inside the sleeve connector 3, see figs. 9 and 10. Continuous should be construed so as to mean that it allows entry and threading of a connective portion along its full length, such that it may screwed through the . The outer ends 15,25 of the first and second connective portions 14,24 are adapted to meet each other inside the sleeve 3. Preferably, both or at least one of the outer ends 15,25 have a rough texture such that a friction lock will form between them when screwed into a close contact. This friction lock will make sure that the terminals 1,2 will not be released from the connection.

Parts of the first and second connective portions 14,24 are threaded, specifically the outer parts of said first and second connective portions 14,24. Similarly, the outer portions of the inner connective portion 31, i.e. the portions closest to the opening thereof are provided with internal threads. In the shown embodiments, almost the full length of each connective portion is provided a thread, but this is not necessary. For instance, it may be advantageous to have a thread free portion inside the sleeve connector 3 at and around the portion where the outer ends 15,25 of the first and second connective portions 14,24 meet in order to allow a tensional force to build up in the sleeve connector 3 that will force the outer ends 15,25 of the first and second connective portions 14,24 towards each other and provide a more prominent locking between them. Also, the outer parts of the first and second connective portions 14,24 may be arranged without threads to allow a tensional force to build up in the sleeve connector 3.

In the shown embodiment, the connective portion 14 of the first terminal part 1 has a length L1 that substantially corresponds to the length L3 of the sleeve connector 3. The length L2 of the connective portion 24 of the second terminal part 2 is preferably about half the length L1 of the connective portion 14 of the first terminal part 1. Hence, typically a relation between the different lengths may be described as L1 ≈ 2 * L2 ≈ L3. This relation is however not crucial for the function of the joint of the wire arrangement.

An important aspect of the wire arrangement is that a combined length L1 + L2 of the connective portions 14,24 of the first and second terminal parts 1,2 is longer than the length L3 of the sleeve connector 3, i.e. that L1 + L2 > L3. This allows the connective portions 14,24 of the first and second terminal parts 1,2 to meet inside the sleeve connector 3 without risking that both the respective main portions 16,26 of the terminal parts 1,2 will come into contact with the sleeve connector 3.

Preferably, the length L1 of the connective portion 14 of the first terminal part 1 is between 75% and 150% the length L3 of the sleeve connector 3, i.e. L1 = x * L3; 0.75 < x < 1.5.

The connective portion 24 of the second terminal part 2, on the other hand, has a length L2 that corresponds to substantially half the length L1 of the connective portion 14 of the first terminal part 1 and hence also the length L3 of the sleeve connector 3. In a preferred embodiment, the length L1 of the connective portion 14 of the first terminal part 1 is 25 % longer than the length L2 of the connective portion 24 of the second terminal part 2, or even 50 % longer. Also, in a preferred embodiment, the length L1 of the connective portion 14 of the first terminal part 1 is less than 300 % longer than the length L2 of the connective portion 24 of the second terminal part 2, or even les that 200 % longer i.e. L1 = y * L2; 1.25 < y < 4 or 1.5 < y < 3.

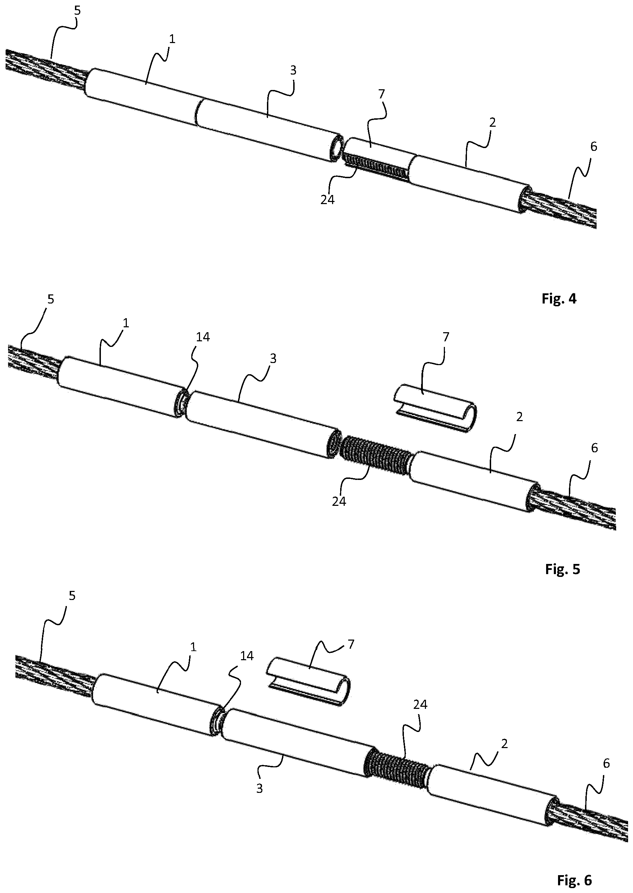

Below, with reference to figs. 4-8, a method of connecting two wire ends 5 and 6 to each other will be described.

Typically, the wire arrangement is delivered as presented in fig. 4, i.e. with the sleeve connector 3 fully threaded onto the connective portion 14 of the first terminal part 1, and the thread protector 7 arranged to cover the connective portion 24 of the second terminal part 2. This is an advantageous manner of transporting the wire arrangement as it implies that both the connective portions 14 and 24 are protected from damages. Further, this positioning is a good starting point for the method of connecting the two wire ends to each other. It should however be noted that the thread protector 7 is complementary and is not necessary for the function of the wire arrangement. Further, if a tread protector is used it may be provided in many different forms, e.g. as plastic tube or as a metal part arranged to be permanently fixed to an exposed thread, and such a thread may not be adapted to a releasable attachment as desired e.g. during transport of the wire arrangement.

In fig. 5, the thread protector 7 has been removed from the connective portion 24 of the second terminal part 2 and the sleeve connector 3 has been released half a turn or more from the first terminal part 1, such that said sleeve connector 3 is no longer fixed to the first terminal part 1. From this position it will be possible to screw the sleeve connector 3 onto the connective portion 24 of the second terminal part 2 and simultaneously partly unscrewing said sleeve connector 3 from the connective portion 14 of the first terminal part 1. As an alternative step it may be useful to separately screw the connective portion 24 of the second terminal part 2 into the sleeve connector 3 before pursuing the connection by rotating only the sleeve connector 3. This is schematically illustrated by the position of fig. 6. From this position the sleeve connector 3 will be rotated so as to be threaded onto the connective portion 24 of the second terminal part 2 and simultaneously be partly unthreaded from the connective portion 14 of the first terminal part 1.

In fig. 7, the sleeve connector 3 has been threaded into a position in which the sleeve connector 3 covers about half the length L1 of the connective portion 14 of the first terminal part 1, and close to the whole of the length L2 of the connective portion 24 of the second terminal part 2. From this position, the first and/or second terminal part 1, 2 is/are tightened until the outer end 15 of the connective portion 14 of the first terminal part 1 meets the outer end 25 of the connective portion 24 of the second terminal part 2 inside said sleeve connector 3.

Preferably, as a first step from the position in fig. 7, the second terminal part 2 is threaded into the sleeve connector 3 such that the main portion 26 thereof abuts the edge of the sleeve connector 3. Subsequently, the first terminal part 1 is threaded into the sleeve connector 3 such that the outer end 15 of the connective portion 14 thereof meets the outer end 25 of the connective portion 24 of the second terminal part 2 inside said sleeve connector 3.

In fig. 8, the first and second terminal part 1 and 2 have been tightened into the sleeve connector 3. Further, the thread protector 7 has been arranged around the otherwise exposed connective portion 14 of the first terminal part 1. In this position, the thread protector 7 may fulfil a plurality of functions. Firstly, the thread protector 7 will protect the connective portion 14 of the first terminal part 1 from superficial damages. Further, it will allow for spring safety hook to slide pass the wire arrangement, which is comprised of the first and second terminal part 1 and 2 and the sleeve connector 3, in a single step. Another function of the thread protector 7 is to lock the wire arrangement, such that it will provide a further protection for it from being unthreaded.

The length of the thread protector 7 should roughly correspond to the whole of the length L2 of the connective portion 24 of the second terminal part 2 and hence half the length L1 of the connective portion 14 of the first terminal part 1. Possible, the length of the thread protector 7 may be just a little bit shorter, such that it will have some additional room to fit between the main portion 16 of the first terminal part 1 and the sleeve connector 3 so as to be applied around the exposed portion of the connective portion 14 of the first terminal part 1. The thread protector 7 may be clamped onto connective portion 14 of the first terminal part 1 and it may include edge portions adapted to interfere with the thread and the sleeve connector 3, to provide a mechanical stop for the sleeve connector.

In a particular embodiment, the portion of the length L1 of the connective portion 14 of the first terminal part 1 that is not housed inside the sleeve connector 3 is not provided with a thread, but is e.g. instead cylindrical. In such an embodiment, no parts of the thread will be exposed in the applied position.

Figs. 9 and 10 show a sectional view of the wire arrangement in a joined mode, in which the outer end 15 of the connective portion 14 of the first terminal part 1 meets the outer end 25 of the connective portion 24 of the second terminal part 2 inside said sleeve connector 3. The interaction between these outer ends 15 and 25 will provide a friction lock by means of clamping action of the opposed connective portions 14 and 24.

Above, the invention has been described with reference to specific embodiments. The invention is however not limited to these embodiments. It is obvious to a person skilled in the art that other embodiments are possible within the scope of the following claims.

## Claims

1. A wire connection arrangement for joining two wire ends (5,6), the wire arrangement comprising:
- a first terminal part (1) having a wire attachment end (11) with an opening (13) for receiving a first wire end (5), and an opposite connection end (12) with a connective portion (14) at least partly provided with a thread,
- a second terminal part (2) having a wire attachment end (21) with an opening (23) for receiving a second wire end (6), and an opposite connection end (22) with a connective portion (24) at least partly provided with a thread,
- and a sleeve connector (3) comprising an inner connective portion (31) at least partly provided with a thread for receiving and engaging the connective portions (14,24) of the first and second terminal parts (1,2), respectively, **characterised in that** the inner connective portion (31) is continuous, wherein a combined length (L1 + L2) of the connective portions (14,24) of the first and second terminal parts (1,2) is longer than a length (L3) of the sleeve connector (3), such that the connective portions (14,24) of the first and second terminal parts (1,2) may meet inside said sleeve connector (3), wherein a length (L1) of the connective portion (14) of the first terminal part (1) is greater than a length (L2) of the connective portion (24) of the second terminal part (2).

2. The wire connection arrangement according to claim 1, wherein the length (L3) of the sleeve connector (3) is greater than the length (L2) of the connective portion (24) of the second terminal part (2).

3. The wire connection arrangement according to claim 1 or 2, wherein the length (L1) of the connective portion (14) of the first terminal part (1) is between 50 % and 200 % longer than the length (L2) of the connective portion (24) of the second terminal part (2).

4. The wire connection arrangement according to claim 3, wherein the length (L1) of the connective portion (14) of the first terminal part (1) is between 75 % and 150 % the length (L3) of the sleeve connector (3).

5. The wire connection arrangement according to anyone of the preceding claims, wherein the wire arrangement further comprises a thread protector (7), arranged to cover an exposed portion of the connective portion (14,24) of the first or second terminal part (1,2).

6. A method of connecting two wire ends (5,6) to each other, whereof a first wire end (5) is attached to a first terminal part (1) and second wire end (6) is attached to a second terminal part (2), the first and second terminal parts (1,2) comprising a respective connective portion (14,24), **characterised by** screwing a sleeve connector (3) onto the connective portion (24) of the second terminal part (2) and simultaneously partly unscrewing said a sleeve connector (3) from the connective portion (14) of the first terminal part (1), and by tightening the first and/or the second terminal part (1,2) until an outer end (15) of the connective portion (14) of the first terminal part (1) meets an outer end (25) of the connective portion (24) of the second terminal part (2) inside said sleeve connector (3).

## Patentansprüche

1. Drahtseilverbindungsanordnung zum Verbinden zweier Drahtseilenden (5, 6), wobei die Drahtseilanordnung Folgendes umfasst:
- einen ersten Abschlussteil (1) mit einem Drahtseilbefestigungsende (11) mit einer Öffnung (13) zum Aufnehmen eines ersten Drahtseilendes (5) und einem gegenüberliegenden Verbindungsende (12) mit einem Verbindungsabschnitt (14), zumindest teilweise mit einem Gewinde versehen,
- einen zweiten Abschlussteil (2) mit einem Drahtseilbefestigungsende (21) mit einer Öffnung (23) zum Aufnehmen eines zweiten Drahtseilendes (6) und einem gegenüberliegenden Verbindungsende (22) mit einem Verbindungsabschnitt (24), zumindest teilweise mit einem Gewinde versehen,
- und einen Hülsenverbinder (3), umfassend einen inneren Verbindungsabschnitt (31), zumindest teilweise mit einem Gewinde versehen, um die Verbindungsabschnitte (14, 24) des ersten bzw. des zweiten Abschlussteils (1, 2) aufzunehmen und in Eingriff zu bringen, **dadurch gekennzeichnet, dass** der innere Verbindungsabschnitt (31) durchgehend ist, wobei eine kombinierte Länge (L1 + L2) der Verbindungsabschnitte (14, 24) des ersten und des zweiten Abschlussteils (1, 2) länger ist als eine Länge (L3) des Hülsenverbinders (3), sodass sich die Verbindungsabschnitte (14, 24) des ersten und des zweiten Abschlussteils (1, 2) innerhalb des Hülsenverbinders (3) treffen können, wobei eine Länge (L1) des Verbindungsabschnitts (14) des ersten Abschlussteils (1) größer ist als eine Länge (L2) des Verbindungsabschnitts (24) des zweiten Abschlussteils (2).

2. Drahtseilverbindungsanordnung nach Anspruch 1, wobei die Länge (L3) des Hülsenverbinders (3) größer ist als die Länge (L2) des Verbindungsabschnitts (24) des zweiten Abschlussteils (2).

3. Drahtseilverbindungsanordnung nach Anspruch 1 oder 2, wobei die Länge (L1) des Verbindungsabschnitts (14) des ersten Abschlussteils (1) zwischen 50 % und 200 % länger ist als die Länge (L2) des Verbindungsabschnitts (24) des zweiten Abschlussteils (2).

4. Drahtseilverbindungsanordnung nach Anspruch 3, wobei die Länge (L1) des Verbindungsabschnitts (14) des ersten Abschlussteils (1) zwischen 75 % und 150 % der Länge (L3) des Hülsenverbinders (3) beträgt.

5. Drahtseilverbindungsanordnung nach einem der vorhergehenden Ansprüche, wobei die Drahtseilanordnung ferner einen Gewindeschutz (7) umfasst, der so angeordnet ist, dass er einen freiliegenden Abschnitt des Verbindungsabschnitts (14, 24) des ersten oder des zweiten Abschlussteils (1, 2) bedeckt.

6. Verfahren zum Verbinden zweier Drahtseilenden (5, 6) miteinander, wobei ein erstes Drahtseilende (5) an einem ersten Abschlussteil (1) und ein zweites Drahtseilende (6) an einem zweiten Abschlussteil befestigt wird (2), wobei der erste und der zweite Abschlussteil (1,2) jeweils einen Verbindungsabschnitt (14,24) umfassen, **gekennzeichnet durch** Aufschrauben eines Hülsenverbinders (3) auf den Verbindungsabschnitt (24) des zweiten Abschlussteils (2) und gleichzeitiges teilweises Abschrauben des Hülsenverbinders (3) von dem Verbindungsabschnitt (14) des ersten Abschlussteils (1) sowie durch Anziehen des ersten und/oder des zweiten Abschlussteils (1, 2) bis ein äußeres Ende (15) des Verbindungsabschnitts (14) des ersten Abschlussteils (1) auf ein äußeres Ende (25) des Verbindungsabschnitts (24) des zweiten Abschlussteils (2) innerhalb des Hülsenverbinders (3) trifft.

## Revendications

1. Agencement de connexion de fil destiné à joindre deux extrémités de fil (5, 6), l'agencement de fil comprenant :
- une première partie de borne (1) ayant une extrémité d'attache de fil (11) avec une ouverture (13) destinée à recevoir une première extrémité de fil (5), et une extrémité de connexion opposée (12) avec une portion de connexion (14) au moins partiellement pourvue d'un filet,
- une seconde partie de borne (2) ayant une extrémité d'attache de fil (21) avec une ouverture (23) destinée à recevoir une seconde extrémité de fil (6), et une extrémité de connexion opposée (22) avec une portion de connexion (24) au moins partiellement pourvue d'un filet,
- et un connecteur à manchon (3) comprenant une portion de connexion intérieure (31) au moins partiellement pourvue d'un filet destiné à recevoir et entrer en prise avec les portions de connexion (14, 24) des première et seconde parties de borne (1, 2), respectivement, **caractérisé en ce que** la portion de connexion intérieure (31) est continue, dans lequel une longueur combinée (L1 + L2) des portions de connexion (14, 24) des première et seconde parties de borne (1, 2) est plus longue qu'une longueur (L3) du connecteur à manchon (3), de telle sorte que les portions de connexion (14, 24) des première et seconde parties de borne (1, 2) puissent se rejoindre à l'intérieur dudit connecteur à manchon (3), dans lequel une longueur (L1) de la portion de connexion (14) de la première partie de borne (1) est plus grande qu'une longueur (L2) de la portion de connexion (24) de la seconde partie de borne (2).

2. Agencement de connexion de fil selon la revendication 1, dans lequel la longueur (L3) du connecteur à manchon (3) est plus grande que la longueur (L2) de la portion de connexion (24) de la seconde partie de borne (2).

3. Agencement de connexion de fil selon la revendication 1 ou 2, dans lequel la longueur (L1) de la portion de connexion (14) de la première partie de borne (1) est entre 50 % et 200 % plus longue que la longueur (L2) de la portion de connexion (24) de la seconde partie de borne (2).

4. Agencement de connexion de fil selon la revendication 3, dans lequel la longueur (L1) de la portion de connexion (14) de la première partie de borne (1) est entre 75 % et 150 % de la longueur (L3) du connecteur à manchon (3).

5. Agencement de connexion de fil selon l'une quelconque des revendications précédentes, dans lequel l'agencement de fil comprend en outre un protecteur de filet (7), agencé pour couvrir une portion exposée de la portion de connexion (14, 24) de la première ou seconde partie de borne (1, 2).

6. Procédé de connexion de deux extrémités de fil (5, 6) l'une à l'autre, dans lequel une première extrémité de fil (5) est attachée à une première partie de borne (1) et une seconde extrémité de fil (6) est attachée à une seconde partie de borne (2), les première et seconde parties de borne (1, 2) comprenant une portion de connexion respective (14, 24), **caractérisé par** le vissage d'un connecteur à manchon (3) sur la portion de connexion (24) de la seconde partie de borne (2) et le dévissage partiel simultané dudit connecteur à manchon (3) à partir de la portion de connexion (14) de la première partie de borne (1), et par le serrage de la première et/ou de la seconde partie de borne (1, 2) jusqu'à ce qu'une extrémité extérieure (15) de la portion de connexion (14) de la première partie de borne (1) rejoigne une extrémité extérieure (25) de la portion de connexion (24) de la seconde partie de borne (2) à l'intérieur dudit connecteur à manchon (3).
